# EUROPEAN PATENT SPECIFICATION

(11) **EP 3 479 184 B1**
(45) Date of publication and mention of the grant of the patent: **25.03.2020**
(21) Application number: 17733521.3
(22) Date of filing: 16.06.2017
(51) Int. Cl.: G05D 23/275, H01H 37/00, H01H 37/36, H01H 37/48

(54) **BULB THERMOSTAT WITH POSITIVE SAFETY MEANS**
KOLBENTHERMOSTAT MIT POSITIVEN SICHERHEITSMITTELN
THERMOSTAT À BULBE AVEC MOYENS DE SÉCURITÉ POSITIVE

(30) Priority: 04.07.2016 IT 201600069290
(43) Date of publication of application: 08.05.2019
(73) Proprietor: Thermowatt S.p.A., 60011 Arcevia (Ancona) (IT)
(72) Inventor: CAPITANELLI, Claudio, 60011 Arcevia (Ancona) (IT)
(74) Representative: Premru, Rok
(86) International application number: PCT/IB2017/000754
(87) International publication number: WO 2018/007863

(56) References cited:
- GB-A- 1 088 167
- US-A- 2 589 063
- US-A- 2 610 678
- US-A- 3 591 138

## Description

The object of the present invention is a thermostat provided with the so called "positive" safety means, i.e., capable of permanently cutting off the electrical supply of the heating elements in case of malfunctions of the thermostat.

Even if it is usable in a plurality of applications, the invention relates particularly to the field of the devices for the regulation of the temperature and control of the safety of an electrically powered storage water heater, in accordance to what regulations IEC 60335-1 and 60730-2-9 prescribe in relation to household and similar electrical appliances.

In the field of electrical storage water heaters a single electromechanical device is usually used to carry out both the function of regulation of the heating temperature (that is carried out by subsequent opening/closing of the contacts supplying the heating elements, by virtue of the temperature reached or that maximum set by the user) and that of safety (or thermal protection), by the irreversible opening of the said contacts, when the temperature exceeds the value set as critical.

The present invention relates exclusively to the thermostat's means (term by which the device object of the invention shall be hereinafter referred to) that are intended for carrying out the thermal protection function: more in detail, the object of the present invention are the positive safety means for a themostat utilizing the bulb - capillary - membrane" system as thermo-sensitive element, irrespective that it is integrated in a device that provides also the thermostat for the regulation of the temperature.

The operation of a thermostat of such type (hereinafter referred to "bulb thermostat") is known and is based on expansion variations of the liquid contained in the said membrane, which expands and contracts its volume according to the temperature sensed by the bulb and transmitted to the membrane by the capillary: in case the limit temperature is exceeded, the expansion of said membrane acts on a mechanical kinematic mechanism (described in detail below) that opens the electrical contacts, cutting off the power of the heating elements.

This as long as the technical assistance intervenes in order to restore the normal operation of the safety function of the bulb thermostat, when the temperature will be again within the limits, by acting in counter direction on said kinematic mechanism.

An example of thermostat of this kind is described in the prior document GB 1088167, relative to a thermal protection device comprising thermo-sensitive means associated to mechanical kinematic mechanisms activating in case a certain temperature limit threshold is reached in order to open the electrical contacts associated to the heating elements.

Therefore, in case of overtemperature of the storage water, a thermostat of this kind fully carries out the safety function it is intended for; however it is lost in case of malfunctions of the thermo-sensitive elements, for example due to breakages in the "bulb - capillary - membrane" system and/or leakages of expansible liquid: in such a case, in fact, the thermo-sensitive element is no more capable of activating the kinematic mechanism with the consequent impossibility of opening the electrical contacts and cutting off the power supply of the heating elements.

The object of the present invention is to obviate such kind of drawbacks, by providing suitable means for the activation of the positive safety function of a bulb thermostat even in case of malfunctions of the thermo-sensitive element.

Another object of the present invention is to provide a bulb thermostat provided with positive safety means with reduced size, high sensitivity and simple calibration for carrying out the function of positive safety.

These and other objects, which shall appear clear hereinafter, are achieved with a bulb thermostat according to claim 1.

Other objects may also be achieved through the additional features of the dependent claims.

Further features of the present invention shall be better highlighted by the following description of a preferred embodiment, in accordance with the patent claims and illustrated, purely by way of a non-limiting example, in the annexed drawing tables, in which:
- Fig. 1 illustrates a section of a possible bulb thermostat according to the invention, showing both the means adapted to the function of temperature regulation and those dedicated to the safety function in normal set-up, i.e. at standard operating temperatures and in the absence of malfunctions of the thermostat;
- Fig. 2 shows a partial section of the thermostat according to the invention, depicting the only means dedicated to the safety function, in overtemperature set-up;
- Fig. 3 shows a partial perspective of a detail of the mechanism intended for the positive safety function according to the invention;
- Fig. 4 shows what depicted in figure 2, but with the means dedicated to the safety function in operating set-up for malfunctions of the thermo-sensitive element;
- Fig. 5 shows a partial section of the mechanism of figure 3, in a positive safety set-up intervened in accordance to what illustrated in figure 4. The features of a preferred variant of the invention are now described, using the references in the figures.

It is noted that any dimensional and spatial term (such as "lower", "upper", "inner", "outer", "front", "rear" and the like) refers to the position according to which the components of the thermostat are shown in the annexed figures, without any limiting intent relative to the possible operating conditions.

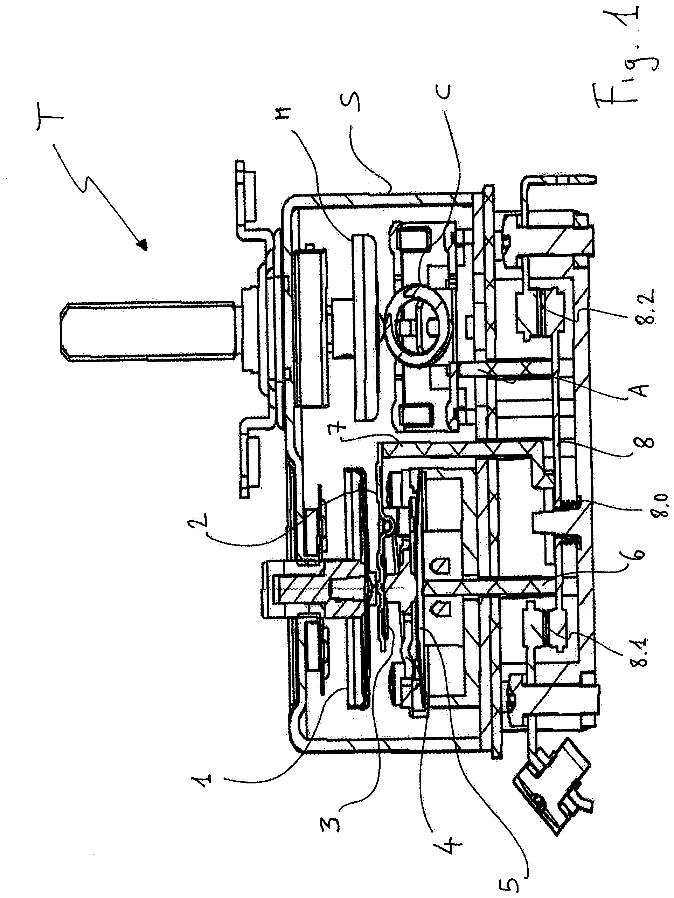

With reference to Fig. 1, T indicates the bulb thermostat as a whole, comprising a box-shaped structure S wherein both the means intended to the function of temperature regulation and those adapted to the safety function are located: however, it should also be reiterated that the integration of the two functions is only optional, while the minimum variant of the invention envisages the presence of the only means adapted to the safety function.

In fact, as anticipated above, the object of the present invention does not regard the means of the thermostat T intended for the function of temperature regulation (shown in the right side of the Fig. 1 alone and excluded in the next figures for greater clarity), which, as per prior art, comprise at least the following elements that make a kinematic chain capable of alternatively opening and closing the electrical contacts 8.2 for the power supply of the heating elements:
- a membrane M containing expansible liquid the volume whereof increases or decreases depending on the temperature sensed by the bulb (immersed in the storage water of the water heater) and transmitted to said membrane M by the capillary (bulb and capillary are not shown in figure),
- known spring mechanical return means C, associated to the said membrane M, capable of shifting vertically to follow the variations in volume of the latter,
- an actuating stem A positioned underneath said spring mechanical return means C, capable of sliding longitudinally in suitable guides obtained in the body of the thermostat T, so as to act snap-wise on an underlying arm 8 (at the ends whereof suitable electrical contacts, normally kept closed by the spring 8.0, are located) and to open the electrical contacts 8.2 in case the maximum temperature set by the user is reached.

The kinematic return means just described, therefore, are intended for the operation of the heating elements (not shown in figure) connected to said electrical contacts 8.2, so as to make the water mass accumulated by the water heater reach and keep the operating temperature desired by the user.

The safety function is instead carried out by the irreversible opening of such electrical contacts 8.1 (or similar electrical contacts 8.2 arranged in series with the latter), caused by the action of the kinematic return means that shall now be described.

Reference 1 indicates a membrane having characteristics substantially similar to those of the membrane M being part of the means adapted to the regulation; said membrane 1, however, has specific characteristics, aimed to carry out the function of positive safety according to the present invention.

The filling of such membrane 1 with expansible liquid, in fact, takes place under vacuum, at a temperature of about -40°C, such that it is already partially expanded in normal operation set-up of the thermostat T (thus at ambient temperature in the order of 20-25°C): it should be noted that such modality of realisation of the membrane 1 is that preferable and experimentally verified so that the invention functions optimally, however the temperature indicated is only exemplary and may vary in case other methodologies are employed, which however must always lead to the attainment of a pre-expansion of said membrane 1 at room temperature.

As said, such pre-expansion of the membrane 1 (which consists in an increase in volume of about 0.5 mm) plays a key role in the positive safety activation mechanism; instead, it would not be essential for the performance of the standard safety function, which activates in case of overtemperature and with known modes, hereinafter briefly described.

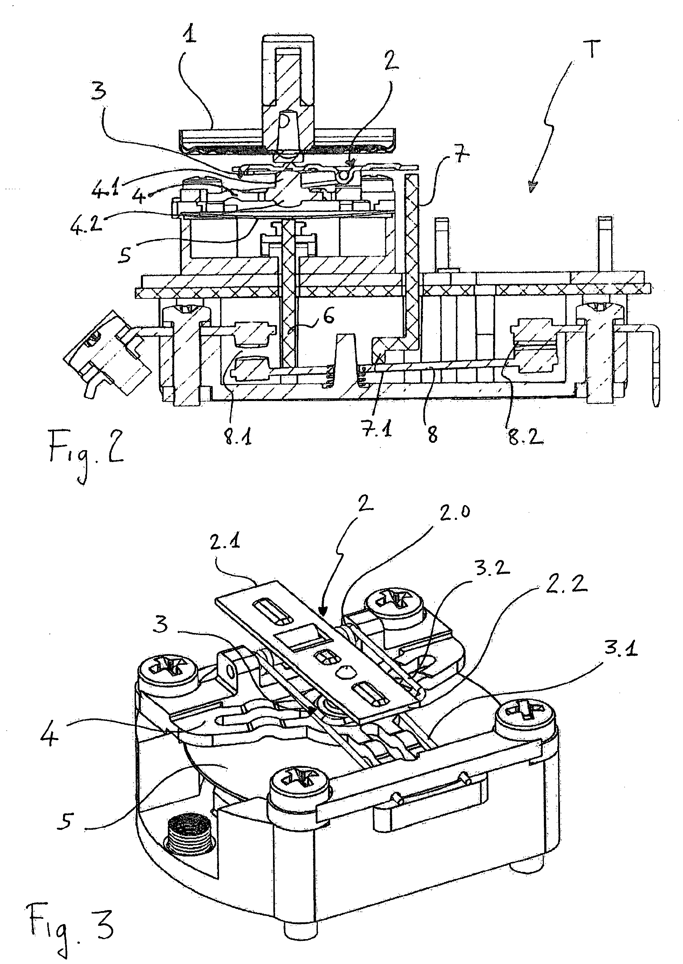

As shown in Fig. 2, when the storage water temperature exceeds a safety limit threshold, the "bulb - capillary - membrane 1" system (only the latter component is shown in figure) causes the expansion of said membrane 1, which acts on a rocker 2 which, in turn, compresses the underlying spring 4.

Such spring 4 is preferably provided, both on top and at the bottom, with respective projecting elements 4.1/4.2 such as to allow a substantial contiguity with the aforesaid rocker 2 (by the upper element 4.1) and with the next element of the kinematic chain (through the lower element 4.2), represented by an inert disk 5 of bistable material, i.e. capable of changing snap-wise its concavity as a result of the action of said spring 4.

The inversion of the concavity of said inert disk 5 acts on an actuating stem 6, causing a longitudinal lowering and the subsequent pressure on the underlying arm 8, so as to cause the immediate opening of the electrical contacts 8.1 and the cut-off of the power supply to the heating elements.

It is then possible to restore the continuity of such electrical contacts 8.1 when the temperature drops again within the safety limits and the expansion of the membrane 1 returns to the initial set-up, by the intervention of the technical assistance that will act in counter direction on the actuating stem 6 to invert the concavity of the inert disk 5.

The kinematic chain just described, substantially, has long been known in the safety thermostats, with slight construction differences depending on the types of thermostat: for example it is clear that the rocker 2 is not essential, considering that the expansion of the membrane 1 may act directly on the underlying spring 4 or on equivalent kinematic return means, as well as the projecting elements 4.1/4.2 of said spring 4 are not even required.

The said rocker 2, in cooperation with a spring 3 described below, assumes a key role for the performance of the positive safety function, activating in the event that one or more of the kinematic return means of the standard safety function do not operate properly: this occurs mainly due to malfunctions affecting the thermo-sensitive element consisting of the "bulb - capillary - membrane 1" system, which loses the ability to activate the above kinematic mechanism. Such rocker 2 (typically a first grade lever) is provided with oscillation fulcrum 2.0 constrained to the body of the thermostat T, and comprises:
- an arm 2.2 extending in the direction of the kinematic chain intended for the standard safety function, locating underneath said membrane 1, and
- an opposed arm 2.1 extending outside said kinematic chain.

Figures 3 to 5 show in detail the operation of the mechanism for the activation of the positive safety, object of the present invention, which comprises a spring 3 associated to said rocker 2 and located underneath its arm 2.2 so as to keep it continuously pressed on the membrane 1.

The shape of said spring 3, which in conclusion operates opposing the downwards movement of the membrane 1 on the rocker 2, is well visible in the detail of figure 3, and is preferably made like a clothes peg, comprising:
- a lower arm 3.1 with free end constrained to the body of the thermostat T,
- an upper arm 3.2 in contact with the lower part of the arm 2.2 of the rocker 2 and responsible for the elastic thrust of the latter towards the overlying membrane 1,
- said arms 3.1/3.2 being hinged on the same oscillation fulcrum 2.0 of said rocker 2.

However, the spring 3 may be of different types than that exemplified in the attached figures; it is sufficient that it is an elastic element adapted to ensure continuous contact between the arm 2.2 of the rocker 2 and the membrane 1, thanks to the upward thrust exerted by said elastic element 3, opposing the expansion or contraction of said membrane 1.

When the thermostat T operates in overtemperature set-up and activates the standard safety function, the said rocker 2 (and the relevant underlying spring 3) does not perform any autonomous or necessary function, passively undergoing the longitudinal movement caused by the expansion of the membrane 1, with the kinematic return methods described above and shown in Fig. 2.

On the contrary, if the integrity of the "bulb - capillary - membrane 1" system is lost, the assembly consisting of the rocker 2 and the spring 3 assumes a fundamental role so that the positive safety function is properly carried out.

In the event of malfunctions of the "bulb - capillary - membrane 1" system, for example due to breakages at the capillary or bulb or due to leakage of expansible liquid by the membrane 1, it happens in fact that volume of the latter decreases, losing the pre-expansion originally existing in the normal operation set-up and the ability to expand in case of temperature rise or reaching the limit temperature.

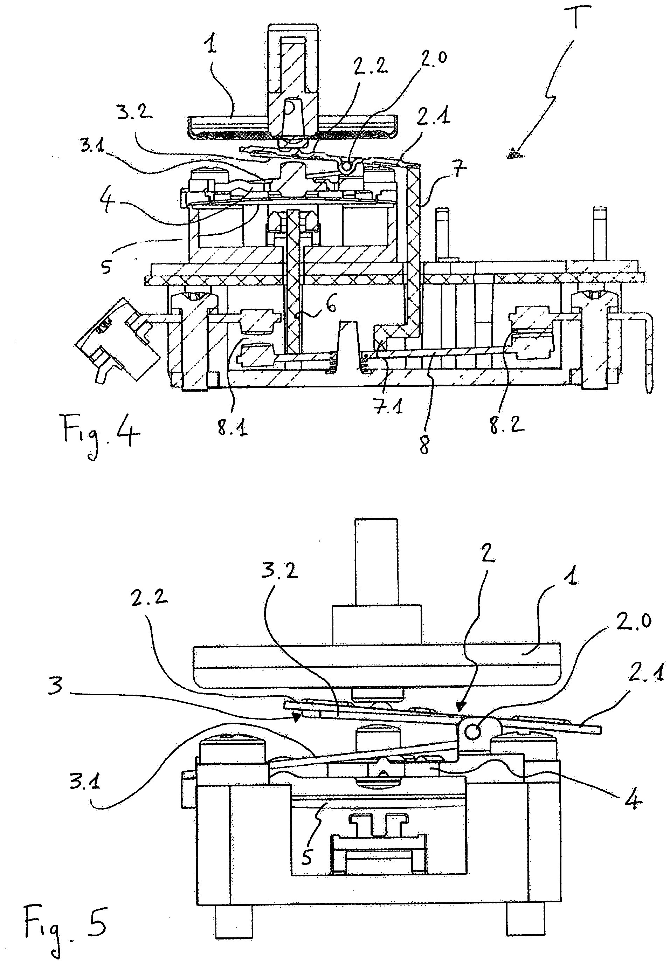

As exemplified in Figs. 4 and 5, the contraction in volume of said membrane 1 causes the arm 2.2 of the rocker 2 to rise, due to the thrust exerted by the spring 3 that continuously maintains the contact between said membrane 1 and the rocker 2 (or better, the arm 2.2 of said rocker 2).

Conversely, the arm 2.1 of the rocker lowers and its end acts on an actuating stem 7, positioned vertically and capable of sliding longitudinally in special guides obtained in the body of the thermostat T.

Finally, the lower end 7.1 of such actuating stem 7 acts on the underlying arm 8, causing the opening of the electrical contacts 8.1 and the cut-off of the power supply of the heating elements.

The opening of such contacts 8.1 is permanent and irreversible, meeting all the positive safety regulations, as no means of the thermostat T can revert the membrane 1 or the rocker 2 to the starting condition: the intervention of the technical assistance is therefore needed, that will repair the thermostat T, replacing the flawed membrane 1 and/or its sensitive elements (bulb, capillary). From the above description the advantages attainable with the present invention appear clear, the first of which concerns the fulfilment of the obligations deriving from the IEC 60335-1 and 60730-2-9 standards on the safety of household and similar electrical appliances, allowing the activation of the positive safety function even in case of breakages of the thermo-sensitive elements of a bulb thermostat.

A second order of advantages concerns the possibility of making a thermostat T of compact dimensions (including thermostats combining both the safety and temperature regulation function) without altering the architecture of a thermostat of the prior art, because the means for the activation of positive safety have a reduced footprint and are substantially integrated in the kinematic return means of the standard safety.

It is clear that several variants of the positive safety kinematic mechanism described above are possible to the man skilled in the art, without departing from the novelty scopes of the inventive idea, as well as it is clear that in the practical embodiment of the invention the various components described above may be replaced with technically equivalent ones.

For example, it should be noted that in the variant shown in the figure the actuating stem 7 causes the opening of the electrical contacts 8.1 because its lower end 7.1 insists on a point of the arm 8 that is closer to this rather than to the electrical contacts 8.2: however, without distinction, a contrary embodiment solution may be contemplated, or even to obtain the simultaneous opening of both electrical contacts 8.1/8.2 in case the end 7.1 of said actuating stem 7 insists exactly in the middle of the arm 8 (the cut of the power supply to the heating elements of the water heater takes place in any case irrespective of which electrical contact 8.1/8.2 is opened).

## Claims

1. Bulb thermostat (T) for the safety of a heating appliance, in particular electrical storage water heater, comprising:
- means (1, 4, 5, 6, 8) for the standard safety, comprising:
- thermo-sensitive elements (1) adapted to sense the temperature of a fluid to be controlled, consisting of a membrane (1) expansible according to the temperature sensed by a bulb and transmitted therefrom to said membrane (1) from a capillary,
- return means (4, 5, 6, 8) activated by the expansion of said membrane (1) in case of overtemperature and adapted to open permanently the electrical contacts (8.1, 8.2) supplying the heating elements, said return means (4, 5, 6, 8) consisting of a kinematic chain comprising:
- a spring (4) compressed by said membrane (1), operating on an inert disk (5) of bistable material in order to vary snap-wise the concavity thereof,
- an actuating stem (6) activated by said inert disk (5), which acts on an underlying arm (8) in order to open said electrical contacts (8.1, 8.2),
**characterised in that**
it further comprises means (2, 3, 7) for the positive safety, adapted to open permanently and irreversibly said electrical contacts (8.1, 8.2) even in case of breakage of said thermo-sensitive elements (1) that causes the inability to expand by said membrane (1) and the consequent impossibility of activation of the standard safety,
said membrane (1) being filled with expansible liquid vacuum inserted at low temperature, such that it is already partially expanded at room temperature,
the loss of said pre-expansion of said membrane (1) activating said means for the positive safety (2, 3, 7) that comprise:
- a rocker (2) located underneath the membrane (1), comprising an arm (2.2) placing underneath said membrane (1) and an opposed arm (2.1) extending beyond an oscillation fulcrum (2.0),
- an elastic element (3) associated to said rocker (2), located underneath said arm (2.2) and adapted to keep it continuously in contact with said pre-expanded membrane (1), by operating in contrast with the movement of such membrane (1) caused by the expansion or contraction thereof,
- an actuating stem (7), positioned vertically and capable of sliding longitudinally, actuated by said opposed arm (2.1) of said rocker (2) in case of breakage of said thermo-sensitive elements that cause the loss of the pre-expansion of said membrane (1), causing the rise of said arm (2.2) and the consequent lowering of said opposed arm (2.1),
the lower end (7.1) of said actuating stem (7) acting on the underlying arm (8) in order to open said electrical contacts (8.1, 8.2) permanently and irreversibly.

2. Thermostat (T) according to the previous claim,
**characterised in that**
said elastic element (3) comprises a spring having:
- a lower arm (3.1) with free end constrained to the body of said thermostat (T),
- an upper arm (3.2) in contact with the lower part of the arm (2.2) of the rocker (2), adapted to push it towards the overlying membrane (1) in order to ensure the continuous contact between said arm (2.2) of the rocker (2) and membrane (1),
- said lower (3.1) and upper (3.2) arms being hinged on the same oscillation fulcrum (2.0) of said rocker (2).

3. Thermostat (T) according to any previous claim,
said membrane (1) is filled up with expansible liquid vacuum inserted to a temperature of about -40°C.

4. Thermostat (T) according to any previous claim,
**characterised in that**
it further comprises means for the regulation of the temperature of a heating appliance, in particular electrical storage water heater, said means (M, C, A, 8) comprising:
- thermo-sensitive elements (M) adapted to sense the temperature of a fluid to be controlled, consisting of a membrane (M) expansible according to the temperature sensed by a bulb and transmitted therefrom to said membrane (M) from a capillary,
- return means (C) associated with said membrane (M), capable of shifting vertically to follow the variations in volume of such membrane (M),
- an actuating stem (A), positioned underneath said return means (C), capable of sliding longitudinally in order to act on the underlying arm (8) so as to open, in case the maximum temperature is reached, the electrical contacts (8.2) supplying the heating elements.

## Patentansprüche

1. Kapillarrohrthermostat (T) für die Sicherheit eines Heizgerätes, insbesondere eines elektrischen Warmwasserspeichers, umfassend:
- Mittel (1, 4, 5, 6, 8) für die Standardsicherheit, umfassend:
- wärmesensitive Elemente (1), die geeignet sind, die Temperatur einer zu kontrollierenden Flüssigkeit zu erfassen, die aus einer Membran (1) bestehen, die entsprechend der Temperatur, die von einem Thermometer erfasst wird und davon von einer Kapillare auf die Membran (1) übertragen wird, ausdehnbar ist,
- Rückstellmittel (4, 5, 6, 8), die durch die Ausdehnung der Membran (1) bei Übertemperatur aktiviert werden und geeignet sind, die elektrischen Kontakte (8.1, 8.2), die die Heizelemente versorgen, dauerhaft zu öffnen, wobei die Rückstellmittel (4, 5, 6, 8) aus einer kinematischen Kette bestehen, umfassend:
- eine Feder (4), die durch die Membran (1) beaufschlagt wird, die auf eine inerte Scheibe (5) aus bistabilem Material einwirkt, um die Wölbung davon sprungartig zu ändern,
- eine Betätigungsstange (6), durch die inerte Scheibe (5) aktiviert wird, die auf einen darunterliegenden Arm (8) einwirkt, um die elektrischen Kontakte (8.1, 8.2) zu öffnen,
**dadurch gekennzeichnet, dass**
es ferner Mittel (2, 3, 7) für die positive Sicherheit aufweist, die geeignet sind, um die elektrischen Kontakte (8.1, 8.2) dauerhaft und irreversibel zu öffnen, selbst wenn die wärmesensitiven Elemente (1) ausfallen, was dazu führt, dass sich die Membran (1) nicht ausdehnen kann und die Standardsicherheit folglich nicht aktiviert werden kann, wobei die Membran (1) mit einer ausdehnbaren Flüssigkeit gefüllt ist, die bei niedriger Temperatur unter Vakuum zugeführt ist, so dass sie bei Raumtemperatur bereits teilweise ausgedehnt ist,
wobei der Verlust der Vorausdehnung der Membran (1) die Mittel für die positive Sicherheit (2, 3, 7) aktiviert, die aufweisen:
- eine Wippe (2), die sich unter der Membran (1) befindet, die einen Arm (2.2), der unter der Membran (1) angeordnet ist, und einen gegenüberliegenden Arm (2.1) aufweist, der sich über einen Schwingungsdrehpunkt (2.0) hinaus erstreckt,
- ein elastisches Element (3), das mit der Wippe (2) verbunden ist, das sich unter dem Arm (2.2) befindet und ausgelegt ist, ihn ständig in Kontakt mit der vorausgedehnten Membran (1) zu halten, indem es der Bewegung dieser Membran (1) entgegenwirkt, die durch die Ausdehnung oder Kontraktion davon verursacht wird,
- eine Betätigungsstange (7), die vertikal angeordnet ist und in Längsrichtung gleiten kann, die von dem gegenüberliegenden Arm (2.1) der Wippe (2) betätigt wird, wenn die wärmesensitiven Elemente ausfallen, was zum Verlust der Vorausdehnung der Membran (1) führt, was das Anheben des Arms (2.1) und das daraus resultierende Absenken des gegenüberliegenden Arms (2.1) verursacht,
wobei das untere Ende (7.1) der einen Betätigungsstange (7) auf den darunterliegenden Arm (8) einwirkt, um die elektrischen Kontakte (8.1, 8.2) dauerhaft und irreversibel zu öffnen.

2. Thermostat (T) nach dem vorhergehenden Anspruch,
**dadurch gekennzeichnet, dass**
das elastische Element (3) eine Feder (4) aufweist, umfassend:
- einen unteren Arm (3.1) mit freiem Ende, der an dem Körper des Thermostats (T) befestigt ist,
- einen oberen Arm (3.2) in Kontakt mit dem unteren Teil des Arms (2.2) der Wippe (2), der geeignet ist, in Richtung der darüber liegenden Membran (1) zu drücken, um einen ständigen Kontakt zwischen dem Arm (2.2) der Wippe (2) und der Membran (1) zu gewährleisten,
- wobei der untere (3.1) und der obere (3.2) Arm an dem gleichen Schwingungsdrehpunkt (2.0) der Wippe (2) angelenkt sind.

3. Thermostat (T) nach einem der vorhergehenden Ansprüche, wobei die Membran (1) mit einer ausdehnbaren Flüssigkeit gefüllt ist, die bis zu einer Temperatur von etwa -40 °C unter Vakuum zugeführt ist.

4. Thermostat (T) nach einem der vorhergehenden Ansprüche,
**dadurch gekennzeichnet, dass**
es ferner Mittel zum Regeln der Temperatur des Heizgerätes, insbesondere eines elektrischen Warmwasserspeichers, aufweist, wobei die Mittel (M, C, A, 8) aufweisen:
- wärmesensitive Elemente (M), die geeignet sind, die Temperatur einer zu kontrollierenden Flüssigkeit zu erfassen, die aus einer Membran (M) bestehen, die entsprechend der Temperatur, die von einem Thermometer erfasst wird und davon von einer Kapillare auf die Membran (M) übertragen wird, ausdehnbar ist,
- Rückstellmittel (C), die mit der Membran (M) verbunden sind, die sich vertikal verschieben können, um den Veränderungen des Volumens dieser Membran (M) zu folgen,
- eine Betätigungsstange (A), die unter den Rückstellmitteln (C) angeordnet ist, die in Längsrichtung gleiten kann, um auf den darunterliegenden Arm (8) einzuwirken, um bei Erreichen der Maximaltemperatur die elektrischen Kontakte (8.2), die die Heizelemente versorgen, zu öffnen.

## Revendications

1. Thermostat à bulbe (T) pour la sécurité d'un appareil de chauffage, notamment chauffe-eau à accumulation électrique, comprenant :
- des moyens (1, 4, 5, 6, 8) pour la sécurité standard, comprenant :
- éléments thermosensibles (1) adaptés pour capter la température d'un fluide à contrôler, constitués d'une membrane (1) expansible en fonction de la température détectée par une ampoule et transmise de celle-ci à ladite membrane (1) depuis un capillaire,
- des moyens de retour (4, 5, 6, 8) activés par l'expansion de ladite membrane (1) en cas de surchauffe et adaptés pour ouvrir en permanence les contacts électriques (8.1, 8.2) alimentant les éléments chauffants, lesdits moyens de retour (4, 5, 6, 8) consistant en une chaîne cinématique comprenant :
- un ressort (4) comprimé par ladite membrane (1), opérant sur un disque inerte (5) en matériau bistable afin de faire varier de façon instantanée sa concavité,
- une tige d'actionnement (6) activée par ledit disque inerte (5), qui agit sur un bras sous-jacent (8) afin d'ouvrir lesdits contacts électriques (8.1, 8.2),
**caractérisé en ce que**
il comprend en outre des moyens (2, 3, 7) pour la sécurité positive, adaptés pour ouvrir de façon permanente et irréversible lesdits contacts électriques (8.1, 8.2) même en cas de rupture desdits éléments thermosensibles (1) qui entraîne l'impossibilité de se dilater par ladite membrane (1) et l'impossibilité conséquente d'activation de la sécurité standard,
ladite membrane (1) étant remplie de vide liquide expansible inséré à basse température, de sorte qu'elle est déjà partiellement dilatée à température ambiante,
la perte de ladite pré-expansion de ladite membrane (1) activant lesdits moyens pour la sécurité positive (2, 3, 7) qui comprennent :
- un balancier (2) situé sous la membrane (1), comprenant un bras (2.2) placé sous ladite membrane (1) et un bras opposé (2.1) s'étendant au-delà d'un pivot d'oscillation (2.0),
- un élément élastique (3) associé audit balancier (2), situé sous ledit bras (2.2) et adapté pour le maintenir en contact permanent avec ladite membrane pré-expansée (1), en opérant en contraste avec le mouvement de cette membrane (1) causée par son expansion ou sa contraction,
- une tige d'actionnement (7), positionnée verticalement et apte à coulisser longitudinalement, actionnée par ledit bras opposé (2.1) dudit balancier (2) en cas de rupture desdits éléments thermosensibles qui provoquent la perte de la pré-expansion de ladite membrane (1), provoquant la montée dudit bras (2.2) et l'abaissement consécutif dudit bras opposé (2.1), l'extrémité inférieure (7.1) de ladite tige d'actionnement (7) agissant sur le bras sous-jacent (8) afin d'ouvrir lesdits contacts électriques (8.1, 8.2) de manière permanente et irréversible.

2. Thermostat (T) selon la revendication précédente,
**caractérisé en ce que**
ledit élément élastique (3) comprend un ressort ayant :
- un bras inférieur (3.1) à extrémité libre contraint au corps dudit thermostat (T),
- un bras supérieur (3.2) en contact avec la partie inférieure du bras (2.2) du balancier (2), adapté pour le pousser vers la membrane sus-jacente (1) afin d'assurer le contact continu entre ledit bras (2.2) du balancier (2) et de la membrane (1),
- lesdits bras inférieur (3.1) et supérieur (3.2) étant articulés sur le même point d'oscillation (2.0) dudit balancier (2).

3. Thermostat (T) selon l'une quelconque des revendications précédentes,
ladite membrane (1) est remplie de vide liquide expansible inséré à une température d'environ -40°C.

4. Thermostat (T) selon l'une quelconque des revendications précédentes,
**caractérisé en ce que**
il comprend en outre des moyens de régulation de la température d'un appareil de chauffage, notamment chauffe-eau électrique à accumulation, lesdits moyens (M, C, A, 8) comprenant :
- des éléments thermosensibles (M) adaptés pour capter la température d'un fluide à contrôler, constitués d'une membrane (M) expansible en fonction de la température détectée par une ampoule et transmise de celle-ci à ladite membrane (M) depuis un capillaire,
- des moyens de retour (C) associés à ladite membrane (M), capables de se déplacer verticalement pour suivre les variations de volume de cette membrane (M),
- une tige d'actionnement (A), positionnée sous lesdits moyens de retour (C), apte à coulisser longitudinalement pour agir sur le bras sous-jacent (8) de manière à ouvrir, au cas où la température maximale serait atteinte, les contacts électriques (8.2) alimentant les éléments chauffants.
